# EUROPÄISCHE PATENTSCHRIFT

(11) **EP 4 197 069 B1**
(45) Veröffentlichungstag und Bekanntmachung des Hinweises auf die Patenterteilung: **10.04.2024**
(21) Anmeldenummer: 21743102.2
(22) Anmeldetag: 07.07.2021
(51) Int. Cl.: H01R 13/52, H01R 13/631, H01R 13/629

(54) **BORDNETZSTECKVERBINDER**
ON-BOARD ELECTRICAL SYSTEM PLUG CONNECTOR
CONNECTEUR MÂLE DE SYSTÈME ÉLECTRIQUE EMBARQUÉ

(30) Priorität: 17.08.2020 DE 102020004993
(43) Veröffentlichungstag der Anmeldung: 21.06.2023
(73) Patentinhaber: Auto-Kabel Management GmbH, 79688 Hausen i.W. (DE)
(72) Erfinder: REEPEN, Richard, 47441 Moers (DE); MATHEWS, Rene, 41462 Neuss (DE)
(74) Vertreter: Cohausz & Florack
(86) Internationale Anmeldenummer: PCT/EP2021/068834
(87) Internationale Veröffentlichungsnummer: WO 2022/037843

(56) Entgegenhaltungen:
- WO-A1-2018/214239
- WO-A1-2019/072513
- CN-U- 204 216 355
- DE-A1-102018 009 478
- FR-A1- 2 754 645
- US-A- 4 697 859

## Beschreibung

Der Gegenstand betrifft einen Bordnetzsteckverbinder, insbesondere für ein Kraftfahrzeugbordnetz, insbesondere in einem Pkw, Lkw oder einem sonstigen motorisch betriebenen Kraftfahrzeug. Der Bordnetzsteckverbinder eignet sich insbesondere für Hochspannungsbordnetze.

In automotiven Anwendungen gibt es verschiedene Arten von Hochspannungsbordnetzen. Einerseits können dies Bordnetze mit Spannungen von über 12V, beispielsweise 24V oder 48V sein. Durch die zunehmende Anzahl von Komfortverbrauchern innerhalb von Kraftfahrzeugen setzt sich die Erkenntnis durch, dass Bordnetze mit 48V vorteilhaft sind. Diese benötigen jedoch andere Steckverbindungen als dies für herkömmliche 12V Bordnetze notwendig ist. Andererseits kann als Hochspannungsbordnetz auch ein Bordnetz für den Antriebsstrang, insbesondere bei elektromotorisch betriebenen Fahrzeugen, verstanden werden. Der Antriebsstrang wird häufig mit Spannungen von mehreren 100V, beispielsweise ca. 400V betrieben. Auf diesen Bordnetzen sind neben hohe Spannungen auch hohe Stromstärken zu erwarten, da zum Antrieb des Kraftfahrzeugs eine erheblich höhere Leistung notwendig ist, als zum Betrieb der Komfortverbraucher. Auch in solchen Bordnetzen werden besonders hohe Anforderungen an Steckverbinder gestellt.

Gerade in den hochdynamischen automotiven Anwendungen werden hohe Anforderungen an die mechanische Stabilität der Bordnetzsteckverbinder gestellt. Bordnetzsteckverbinder müssen dauerhaft eine stabile und elektrisch einwandfreie Verbindung gewährleisten. Durch die mitunter hohen Stromstärken bestehen auch hohe Anforderungen an die Übergangswiderstände von solchen Steckverbindern, um die Verlustwärme am Übergang gering zu halten. Hierzu sind großflächige Kontaktflächen zwischen den Verbindungspartnern notwendig.

Die Veröffentlichung WO 2018/214239 A1 eine elektrische Steckvorrichtung für ein Elektrofahrzeug.

Die Veröffentlichung WO 2019/07251 A1 betrifft eine Hochstrom-Steckverbindung zur Herstellung einer elektrischen Verbindung.

Die Veröffentlichung FR 2 754 645 A1 betrifft einen einpoligen elektrischen Niederspannungsverbinder, der insbesondere dazu bestimmt ist, eine provisorische lokale Stromversorgung mit einem Stromnetzes zu ermöglichen, wenn dieses abgeschaltet wird.

Die Veröffentlichung US 4 697 859 A bezieht sich allgemein auf elektrische Steckverbinder und insbesondere auf Koaxialsteckverbinder für den Schalttafeleinbau, die sowohl elektrisch als auch mechanisch unter verschiedenen Ausrichtungsbedingungen zuverlässig angeschlossen werden können.

Die Veröffentlichung CN 204 216 355 U bezieht sich auf eine koaxiale Steckverbinderanordnung und einen koaxialen Steckverbinder.

Die Veröffentlichung DE 10 2018 009478 A1 betrifft eine Steckverbinderanordnung, aufweisend einen ersten Steckverbinder mit einem ersten Steckverbindergehäuse und einen zweiten Steckverbinder mit einem zweiten Steckverbindergehäuse.

Zur Gewährleistung einer dauerhaft stabilen, elektrisch einwandfreien Verbindung mit einem geringen Übergangswiderstand und hoher Standfestigkeit gegenüber dynamischen Belastungen wird ein Bordnetzsteckverbinder nach Anspruch 1 vorgeschlagen.

Dieser Bordnetzsteckverbinder weist ein erstes Gehäuseteil auf. In diesem ersten Gehäuseteil ist ein erstes Anschlussteil angeordnet. Das Gehäuseteil hat eine Längserstreckung entlang einer Längsachse. Das Gehäuseteil ist dabei insbesondere aus Seitenwänden sowie einem Boden und einem offenen Deckel gebildet. Wenn hier und nachfolgend von Seitenwänden die Rede ist, ist damit stets auch die Einzahl gemeint. Der Deckel kann auch als Stirnseite bezeichnet sein. Das Gehäuse ist insbesondere einstückig aus Wänden, Boden und Stirnseite gebildet. Das Gehäuseteil hat gegenständlich eine stirnseitige Öffnung. Das innerhalb des Gehäuseteils angeordnete Anschlussteil ist in dem Gehäuseteil entlang der Längsachse beweglich angeordnet. Das Anschlussteil kann eine translatorische Bewegung in dem Gehäuseteil entlang der Längsachse vollziehen.

Der Steckverbinder hat neben dem ersten Gehäuseteil auch ein zweites Gehäuseteil. Innerhalb dieses zweiten Gehäuseteils ist ein zweites Anschlussteil angeordnet. Auch das zweite Gehäuseteil ist, wie das erste Gehäuseteil aus Seitenwänden, offenem Deckel und Boden gebildet. Der Deckel kann auch als Stirnseite bezeichnet sein. Das Gehäuse ist insbesondere einstückig aus Wänden, Boden und Stirnseite gebildet. Das Gehäuseteil hat gegenständlich eine stirnseitige Öffnung. Das innerhalb des Gehäuseteils angeordnete Anschlussteil ist in dem Gehäuseteil bevorzugt zu der Längsachse fixiert angeordnet.

Zum Verbinden wird eines der Gehäuseteile in das andere Gehäuseteil eingesteckt und die Anschlussteile kommen dabei in elektrischen Kontakt miteinander. Hierzu sind die Anschlussteile aus elektrisch leitendem Material gebildet und/oder beschichtet. Insbesondere können die Anschlussteile aus einem Kupferwerkstoff oder einem Aluminiumwerkstoff gebildet sein. Auch eine Beschichtung der Anschlussteile, insbesondere auf den Flächen, mit dem die Anschlussteile im verbundenen Zustand miteinander in Kontakt kommen, ist denkbar. Dabei ist eine metallische Beschichtung, insbesondere Verzinnung möglich.

Im verbundenen Zustand des Steckverbinders sind die Gehäuseteile so ineinander gesteckt, dass deren Längsachsen bevorzugt kollinear zueinander verlaufen. Ferner ist das zweite Gehäuseteil relativ zum ersten Gehäuseteil zumindest in Längsrichtung fixiert und das zweite Anschlussteil ist im mechanischen Kontakt mit dem ersten Anschlussteil. Dabei liegen Kontaktflächen der Anschlussteile aneinander an. Kontaktflächen sind insbesondere einerseits eine äußere Mantelfläche eines Anschlussteils, die in unmittelbaren Kontakt mit einer inneren Mantelfläche eines anderen Anschlussteils ist.

Um eine gute elektrische Verbindung herzustellen, müssen die Kontaktflächen fest miteinander verbunden sein. Darüber hinaus muss für die dynamische Stabilität eine Fixierung dieser Verbindung auch in dynamischen Umgebungen gewährleistet sein. Hierzu wird gegenständlich vorgeschlagen, dass das erste Anschlussteil entlang der Längsachse durch ein Federelement federnd in dem ersten Gehäuseteil gelagert ist. Wird das zweite Gehäuseteil mit dem ersten Gehäuseteil verbunden, kommen das erste Anschlussteil und das zweite Anschlussteil in Kontakt miteinander. Durch das Zusammenstecken der Gehäuseteile kommt es zu einer Anpresskraft des zweiten Gehäuseteils gegen das erste Gehäuseteil entlang der Längsachse entgegen der Federkraft des Federelements. Das Federelement wird somit erfindungsmässig im verbunden Zustand gestaucht, wodurch eine permanente Federkraft auf die Verbindung zwischen den beiden Anschlussteilen wirkt. Das erste Anschlussteil wird entgegen der Federkraft in dem ersten Gehäuseteil in Längsrichtung bewegt.

Gemäß einem Ausführungsbeispiel wird vorgeschlagen, dass eines der Anschlussteile eine hülsenförmige Aufnahme ist und eines der Anschlussteile ein zu der Aufnahme kongruentes, stabförmiges Steckelement ist. Die Aufnahme und das Steckelement sind bevorzugt zentrisch in den jeweiligen Gehäuseteilen angeordnet und erstrecken sich jeweils in Längsrichtung. Die Aufnahme und das Steckelement sind bevorzugt auf der Mittenachse des jeweiligen Gehäuseteils.

Die hülsenförmige Aufnahme dient zur Aufnahme des Steckelements. Eine innere Mantelfläche der hülsenförmigen Aufnahme kommt im verbundenen Zustand in unmittelbaren Kontakt mit einer äußeren Mantelfläche des Steckelements. Das Gehäuseteil, welches das Anschlussteil mit der hülsenförmige Aufnahme aufweist, wird bevorzugt in das Gehäuseteil eingesteckt, welches das Anschlussteil mit dem stabförmigen Steckelement aufweist. Zwischen der inneren Mantelfläche des Gehäuseteils und dem stabförmigen Steckelement bildet sich ein Ringraum. In diesen Ringraum wird das andere Gehäuseteil samt hülsenförmiger Aufnahme eingesteckt. In die stirnseitige Öffnung des Gehäuseteils mit dem Steckelement wird das Gehäuseteil mit der hülsenförmigen Aufnahme eingesteckt. Dabei wird das Steckelement in die stirnseitige Öffnung des Gehäuseteils mit der hülsenförmigen Aufnahme eingeschoben. Somit kommt die äußere Mantelfläche des Steckelements in Kontakt mit der inneren Mantelfläche der hülsenförmigen Aufnahme.

Es wird vorgeschlagen, dass im verbundenen Zustand das Steckelement in der Aufnahme eingesteckt und das Federelement komprimiert ist. Das Federelement ist insbesondere eine Stahlfeder, bevorzugt eine Druckfeder. Das Federelement kann jedoch auch aus einem Kunststoff gebildet sein. Das Federelement kann entlang der Längsachse federnd komprimiert werden, wobei im gespannten Zustand das Federelement eine Kraft auf das Anschlussteil so ausübt, dass dieses gegen das jeweils andere Anschlussteil gedrückt wird. Da im verbundenen Zustand die Gehäuseteile in Längsrichtung zueinander fixiert sind, wirkt die Federkraft auf die Kontaktfläche zwischen den beiden Anschlussteilen.

Gemäß einem Ausführungsbeispiel wird vorgeschlagen, dass im verbundenen Zustand eines der Gehäuseteile zumindest teilweise in die stirnseitige Öffnung des anderen Gehäuseteils eingesteckt ist. Durch dieses Einstecken kommen hülsenförmige Aufnahme und Steckelement in unmittelbaren Kontakt miteinander.

Die hülsenförmige Aufnahme erstreckt sich bevorzugt innerhalb des Gehäuseteils in Längsrichtung in dessen Längsachse. Die hülsenförmige Aufnahme hat rohrförmige Seitenwände sowie an einer Stirnseite einen Boden und an der anderen Stirnseite eine Öffnung. Die stirnseitige Öffnung der hülsenförmigen Aufnahme liegt in Richtung der stirnseitigen Öffnung des Gehäuseteils. Der Boden ist bevorzugt geschlossen. Das Gehäuseteil hat eine die hülsenförmige Aufnahme umgebende Form und ist dabei ebenfalls bevorzugt hülsenförmig mit rohrförmigen Seitenwänden.

Das stabförmige Steckelement hat eine Längserstreckung. Innerhalb des Gehäuseteils, in dem das stabförmige Steckelement eingebaut ist, erstreckt sich das Steckelement in seiner Längsrichtung entlang der Längsachse des Gehäuseteils. Das Steckelement hat bevorzugt eine rohrförmige äußere Mantelfläche, welche kongruent zur rohrförmigen, inneren Mantelfläche der hülsenförmigen Aufnahme ist. Das rohrförmige Steckelement ist von dem Gehäuseteil umgeben, wobei die Seitenwände des Gehäuseteils, insbesondere die innere Mantelfläche der Seitenwände des Gehäuseteils parallel zur äußeren Mantelfläche des Steckelements verlaufen. Insbesondere ist die äußere Mantelfläche des Gehäuseteils mit dem Steckelement kongruent zu einer inneren Mantelfläche des Gehäuses mit der hülsenförmigen Aufnahme. Somit kann das Gehäuse mit der hülsenförmigen Aufnahme in das Gehäuse mit dem Steckelement eingesteckt werden und die Gehäuseteile liegen mit ihren inneren und äußeren Mantelflächen aneinander an.

Im verbundenen Zustand ist das erste Gehäuseteil in die stirnseitige Öffnung des zweiten Gehäuseteils eingesteckt oder das zweite Gehäuseteil in die stirnseitige Öffnung des ersten Gehäuseteils eingesteckt.

Gemäß einem Ausführungsbeispiel wird vorgeschlagen, dass sich die Aufnahme von einer stirnseitigen Öffnung hin zu einem Boden verjüngt, insbesondere konisch verjüngt. Diese Verjüngung der Aufnahme führt zu einem besseren Formschluss zwischen Steckelement und Aufnahme. Insbesondere kann das Steckelement soweit in die Aufnahme eingesteckt werden, dass die Kontaktflächen, also die äußere Mantelfläche des Steckelements und die innere Mantelfläche der Aufnahme auf jeden Fall in Kontakt miteinander kommen. Die Verjüngung, insbesondere die konische Verjüngung dient als Toleranzausgleich, da im eingesteckten Zustand stets ein unmittelbarer mechanischer Kontakt zwischen Steckelement und Aufnahme gewährleistet wird.

Es wird auch vorgeschlagen, dass sich das Steckelement hin zu seiner Stirnfläche verjüngt, insbesondere konisch verjüngt. Steckelement und Aufnahme sind bevorzugt kongruent zueinander geformt und haben insbesondere kongruent zueinander verlaufende Verjüngungen, so dass das Steckelement, wenn es in der Aufnahme eingesteckt ist, mit seiner äußeren Mantelfläche an der inneren Mantelfläche der Aufnahme anliegt. Das Federelement führt zu einem Anpressdruck des Steckelements auf die Aufnahme oder umgekehrt. Die in der Längsachse wirkende Federkraft drückt Steckelement und Aufnahme so aufeinander, dass ihre Kontaktflächen fest miteinander verbunden sind.

Gemäß einem Ausführungsbeispiel wird vorgeschlagen, dass im verbundenen Zustand eine innere Mantelfläche der Aufnahme und eine äußere Mantelfläche des Steckelements unmittelbar miteinander in Kontakt sind. Durch diesen unmittelbaren Kontakt wird eine gute elektrische Leitfähigkeit am Übergang gewährleistet. Die ohmschen Verluste werden reduziert, insbesondere durch große Kontaktflächen, die durch die kongruenten Mantelflächen gewährleistet sind.

Gemäß einem Ausführungsbeispiel wird vorgeschlagen, dass sich in der Aufnahme ein Distanzstück vom Boden der Aufnahme hin zu einer stirnseitigen Öffnung der Aufnahme erstreckt. Die sich in Längsachse erstreckende Öffnung des Gehäuseteils und die sich in Längsachse erstreckende Öffnung der hülsenförmigen Aufnahme verlaufen insbesondere kollinear. Auf der Mittenachse kann das Distanzstück angeordnet sein. Auch das Distanzstück erstreckt sich entlang der Längsachse vom Boden hin zur stirnseitigen Öffnung der Aufnahme. Das Distanzstück kann stabförmig sein. In der hülsenförmigen Aufnahme bildet sich ein Ringraum zwischen dem Distanzstück und der inneren Mantelfläche der hülsenförmigen Aufnahme. Das Distanzstück dient dazu, dass das Steckelement nur bis zu einem gewissen Maß in die Aufnahme eingesteckt werden kann. Hierdurch wird ein zu festes Verrasten zwischen Aufnahme und Steckelement verhindert.

Um das Steckelement in die Aufnahm einstecken zu können, muss dieses das Distanzstück aufnehmen. Hierzu hat das Steckelement eine sich von der Stirnseite des Steckelements in Längsachse erstreckenden Rücksprung. Das Gehäuseteil mit dem Steckelement hat ebenfalls eine Aufnahme, innerhalb dessen das Steckelement angeordnet ist Dieses Aufnahme erstreckt sich entlang der Längsachse. Das Steckelement erstreckt sich ebenfalls entlang der Längsachse. Die Längsachsen der Aufnahme des Gehäuseteils und des Steckelements sind bevorzugt kollinear. Innerhalb des Steckelements kann dann der Rücksprung, beispielsweise in Form einer Bohrung, auf der Mittenachse des Steckelements vorgesehen sein.

In diesen Rücksprung greift das Distanzstück im eingebauten Zustand ein. D.h., wenn das Steckelement in die hülsenförmige Aufnahme eingesteckt wird, wird gleichzeitig das Distanzstück in den Rücksprung eingeschoben. Der Rücksprung hat eine gewisse Tiefe innerhalb des Steckelements. Innerhalb des Rücksprungs, beispielsweise durch den Boden ist ein Anschlag für das Distanzstück gebildet. Dadurch wird gewährleistet, dass das Steckelement nur bis zu einer gewissen Tiefe in die hülsenförmige Aufnahme eingesteckt wird, nämlich so weit, bis das Distanzstück an dem Anschlag des Rücksprungs anliegt.

Gemäß einem Ausführungsbeispiel wird vorgeschlagen, dass das erste Anschlussteil mit einem flexiblen Kabel verbunden ist. Das erste Anschlussteil ist federnd an dem Federelement angelenkt und translatorisch innerhalb des Gehäuseteils entlang der Längsachse verschiebbar. Um durch das mit dem Anschlussteil verbundene Kabel diese Verschiebbarkeit nicht zu sehr zu beeinflussen, wird vorgeschlagen, dass das flexible Kabel durch eine Durchführung in das Innere des ersten Gehäuseteils eingeführt ist und entlang der Längsachse beweglich in der Durchführung gelagert ist oder dass das erste Anschlussteil durch eine Durchführung aus dem Inneren des Gehäuseteils herausgeführt ist und entlang der Längsachse beweglich in der Durchführung gelagert ist. Die Durchführung hat insbesondere eine Längserstreckung entlang einer Längsachse, die parallel, bevorzugt kollinear zur Längsachse des Gehäuseteils oder der Aufnahme ist. Die Durchführung verläuft vorzugsweise parallel zur Längsachse, so dass ein Verschieben des Anschlussteils gegen das Federelement entlang der Längsachse nicht durch das Verschieben des Kabels oder des Anschlussteils in der Durchführung behindert wird. Die Verschieberichtung des Kabels oder des Anschlussteils in der Durchführung ist bevorzugt parallel zur Verschieberichtung des Anschlussteils innerhalb des Gehäuseteils gegen das Federelement.

Gemäß einem Ausführungsbeispiel wird vorgeschlagen, dass das erste Anschlussteil an einem radial nach innen weisenden Kragen an der stirnseitigen Öffnung des Gehäuseteils innerhalb des Gehäuseteils gelagert ist. Dieser Kragen führt bevorzugt zu einer Vorspannung des Federelements. Das Federelement ist so an dem Anschlussteil angelenkt, dass es eine Federkraft in Richtung der stirnseitigen Öffnung des Gehäuseteils auf das Anschlussteil ausübt. Durch den Kragen wird das Anschlussteil innerhalb des Gehäuseteils fixiert bzw. gelagert. In das Gehäuseteil kann durch die stirnseitige Öffnung zuerst das Federelement eingesetzt werden. Anschließend wird durch die stirnseitige Öffnung das Anschlussteil gegen das Federelement gedrückt und in das Gehäuseteil eingeschoben.

Zur Fixierung des Anschlussteils innerhalb des Gehäuseelements kann anschließend der Kragen auf die stirnseitige Öffnung des Gehäuseteils aufgesetzt werden und mit dem Gehäuseteil verrasten. Hierzu kann der Kragen insbesondere eine umlaufende Mantelfläche aufweisen, die an der inneren Mantelfläche der Aufnahme des Gehäuseteils anliegt und dort im Einbauzustand verrastet. Hierzu kann ein Verrasten von Rücksprung und Vorsprung zwischen Mantelfläche des Kragens und innerer Mantelfläche des Gehäuseteils vorgesehen sein. Die umlaufende Mantelfläche des Kragens kann in einem Ringraum zwischen der äußeren Mantelfläche des ersten Anschlussteils und der inneren Mantelfläche des ersten Gehäuseteils angeordnet sein. Durch den Kragen wird das Anschlussteil in seiner translatorischen Bewegung entlang der Längsachse in Richtung der stirnseitigen Öffnung fixiert, so dass dieses verliersicher in dem ersten Gehäuseteil angeordnet ist. In Richtung des Bodens des Gehäuseteils wirkt das Federelement auf das Anschlussteil und eine Kraft gegen die Federkraft muss aufgewendet werden, um das Anschlussteil von dem Kragen weg in Richtung des Bodens des ersten Gehäuseteils zu drücken.

Gemäß einem Ausführungsbeispiel wird vorgeschlagen, dass das Federelement zwischen einem Boden des ersten Gehäuseteils und einer zumindest teilweise umlaufenden, radial nach außen weisenden Schulter des ersten Anschlussteils gelagert ist. Das erste Anschlussteil kann zwei Bereiche aufweisen, die unterschiedliche äußere Durchmesser aufweisen. Der erste Bereich liegt im Einbauzustand in Richtung der stirnseitigen Öffnung des ersten Gehäuseteils und hat einen äußeren Durchmesser, der in etwa dem inneren Durchmesser des Gehäuseteils entspricht. Der zweite Bereich des Anschlussteils kann einen kleineren Durchmesser aufweisen und so in Form einer Stufe oder eines Rücksprungs gebildet sein. In den sich bildenden Raum zwischen Anschlussteil und ersten Gehäuseteil kann das Federelement angeordnet sein und an der Stufe angelenkt sein. Im verbundenen Zustand des Steckverbinders ist das Federelement komprimiert und drückt mit einer Federkraft parallel zur Längsachse gegen die Schulter, so dass das erste Anschlusselement in Richtung der stirnseitigen Öffnung des ersten Gehäuseteils gedrückt wird.

Gemäß einem Ausführungsbeispiel wird vorgeschlagen dass an einer äußeren Mantelfläche eines der Gehäuseteile eine umlaufende Dichtung angeordnet ist, die im verbundenen Zustand mit einer inneren Mantelfläche des anderen Gehäuseteils in Kontakt ist oder dass an einer inneren Mantelfläche eines der Gehäuseteile eine umlaufende Dichtung angeordnet ist, die im verbundenen Zustand mit einer äußeren Mantelfläche des anderen Gehäuseteils in Kontakt ist oder dass zwischen einer inneren Mantelfläche eines der Gehäuseteile und einer äußeren Mantelfläche des anderen Gehäuseteils eine umlaufende Dichtung angeordnet. Ein sich eventuell bildender Spalt zwischen äußerer Mantelfläche eines ersten Gehäuseteils und innerer Mantelfläche des anderen Gehäuseteils im verbundenen Zustand kann durch diese Dichtung abgedichtet werden, so dass die Verbindung zwischen hülsenförmiger Aufnahme und Steckelement gegenüber Umwelteinflüssen geschützt ist.

Gemäß einem Ausführungsbeispiel wird vorgeschlagen, dass das zweite Anschlussteil stoffschlüssig an einem elektrischen Leiter, insbesondere an einem Vollmaterialleiter befestigt ist. Der elektrische Leiter, insbesondere ein Flachleiter, kann an einem stirnseitigen Ende oder in seinem Verlauf abisoliert sein. Im Bereich der Abisolierung ist erfindungsmässig auf einer breiten Oberfläche des Flachleiters das Steckelement in Form eines Bolzens angeordnet, insbesondere aufgeschweißt oder angeschraubt sein. Dieser Bolzen kann dann als Steckelement dienen.

Erfindungsmässig weist das zweite Gehäuseteil eine Leiteraufnahme zur Aufnahme des Leiters auf, insbesondere ist die Leiteraufnahme durchgehend und den Leiter entlang seine Ausbreitungsrichtung aufnimmt. Das zweite Gehäuseteil kann den Leiter aufnehmen. Hierzu kann die Leiteraufnahme ein Deckel aufweisen, der scharnierförmig, insbesondere in Form eines Filmscharniers an dem Rest des Gehäuseteils angeordnet ist. Der Leiter wird in die Leiteraufnahm eingelegt, insbesondere mit seinem abisolierten Bereich. Die Isolation des Leiters liegt ebenfalls im Bereich der Leiteraufnahme. Der Deckel der Leiteraufnahme kann dann auf der anderen Seite des Leiters, welcher den Rest des zweiten Gehäuseteils abgewandt ist, auf den Leiter aufgelegt werden und somit die Leiteraufnahme deckelförmig verschließen. Umlaufend der Leiteraufnahme im Bereich der Einführungen für den Leiter sind erfindungsmässig Dichtungen vorgesehen, so dass in Längsrichtung des Leiters keine Feuchtigkeit in die Leiteraufnahme gelangen kann. Der Deckel der Leiteraufnahme kann an dem Rest des zweiten Gehäuseteils abgedichtet fixiert sein, insbesondere durch ein Verclipsen oder Verrasten.

Ausgehend von der Leiteraufnahme erstreckt sich das Gehäuseteil bevorzugt in einer Flächennormalen auf der breiten Oberfläche des Leiters. Insbesondere erstreckt sich die Leiteraufnahme senkrecht zur Längsachse des zweiten Gehäuseteils. Die Längsachse des zweiten Gehäuseteils und die Leiteraufnahme bzw. der in der Leiteraufnahme eingesteckte Leiter verlaufen winklig, bevorzugt senkrecht zueinander.

Gemäß einem Ausführungsbeispiel wird vorgeschlagen dass an dem zweiten Anschlussteil ein stirnseitig angeordneter, die Stirnseite überdeckender Isolator angeordnet ist. Das zweite Anschlussteil ist bevorzugt das Steckelement. Dieses Steckelement ist in dem zweiten Gehäuseteil angeordnet. Für einen Berührschutz kann es sinnvoll sein, dieses Steckelement innerhalb des Gehäuses stirnseitig zu isolieren, so dass ein unbeabsichtigtes Berühren des Steckelements an dessen Stirnseite vermieden wird.

Gemäß einem Ausführungsbeispiel wird vorgeschlagen, dass der Isolator eine zur Aufnahme des Distanzstücks gebildete Öffnung aufweist, insbesondere dass die Öffnung koaxial zum Rücksprung des Steckelements ist. Hierdurch bietet der Isolator einerseits ein Berührschutz und andererseits ermöglicht er das Zusammenstecken von Steckelement und Aufnahme mit Distanzstück.

Gemäß einem Ausführungsbeispiel wird vorgeschlagen, dass an einem der Gehäuseteile ein um eine Achse senkrecht zur Längsachse verschwenkbarer Befestigungshebel angeordnet ist, der im verbundenen Zustand mit einem Befestigungsmittel an dem anderen Gehäuseteil in Eingriff ist. Hierdurch wird die Fixierung der Anschlussteile in Längsrichtung zueinander gewährleistet. Die Gehäuseteile werden ineinander gesteckt und mittels des Befestigungshebels und Befestigungsmittels miteinander zumindest in Richtung der Längsachse fixiert.

Nachfolgend wird der Gegenstand anhand einer Ausführungsbeispiele zeigenden Zeichnung näher erläutert. In der Zeichnung zeigen:
- Fig. 1: eine Ansicht eines ersten Gehäuseteils;
- Fig. 2: das erste Gehäuseteil an einer Anschlusskonsole;
- Fig. 3: ein Längsschnitt durch ein erstes Gehäuseteil;
- Fig. 4: eine Anordnung zwischen einem ersten Gehäuseteil und einem Steckelement;
- Fig. 5: ein erstes Steckelement in einem zweiten Gehäuseteil;
- Fig. 6: eine Schnittansicht durch ein Bordnetzsteckverbinder im unverbundenen Zustand;
- Fig. 7: eine Ansicht eines Bordnetzsteckverbinders im verbundenen Zustand;
- Fig. 8: eine Schnittansicht durch einen Bordnetzsteckverbinder im verbundenen Zustand;
- Fig. 9: ein erstes Gehäuseteil gemäß einem zweiten Ausführungsbeispiel;
- Fig. 10: eine Schnittansicht durch ein erstes Gehäuseteil im unverbundenen Zustand;
- Fig. 11: eine Schnittansicht durch ein erstes Gehäuseteil im verbundenen Zustand;
- Fig. 12: eine Schnittansicht eines Batteriesteckverbinders gemäß einem zweiten Ausführungsbeispiel im verbundenen Zustand;
- Fig. 13: eine Ansicht eines Bordnetzsteckverbinders im verbundenen Zustand.

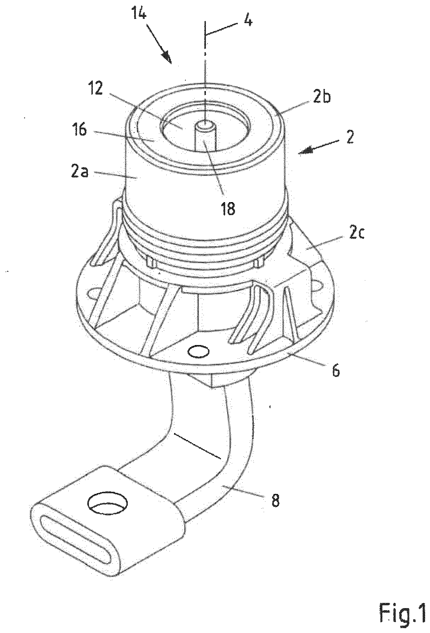

Fig. 1 zeigt ein erstes Gehäuseteil 2 eines Bordnetzsteckverbinders. Das Gehäuseteil 2 erstreckt sich entlang einer Längsachse 4 in einer Längsrichtung. Das erste Gehäuseteil 2 hat eine äußere Mantelfläche 2a und ist begrenzt durch eine Stirnseite 2b. Auf der der Stirnseite 2b gegenüberliegenden Seite, insbesondere an einem Boden 2c des ersten Gehäuseteils kann ein Flansch 6 radial von der äußeren Mantelfläche 2a abstehen. Im Bereich des Bodens 2c hat das Gehäuseteil 2 eine Durchgangsöffnung, durch die ein flexibles Kabel 8 geführt ist.

Zwischen der Stirnseite 2b und dem Boden 2c kann an der äußeren Mantelfläche 2a eine umlaufende Dichtung vorgesehen sein.

Im Inneren des Gehäuseteils 2 ist ein Anschlussteil 12 vorgesehen. Das Anschlussteil 12 erstreckt sich hin zu einer Öffnung 14 an der Stirnseite 2b. Das Anschlussteil 12 ist an einem Kragen 16 angeschlagen. Das Anschlussteil 12 kann parallel zur Längsachse 14 innerhalb des Gehäuseteils 2 bewegt werden. Im Inneren des Anschlussteils 12 kann ein Distanzstück 18 vorgesehen sein, welches metallisch oder nicht metallisch ist.

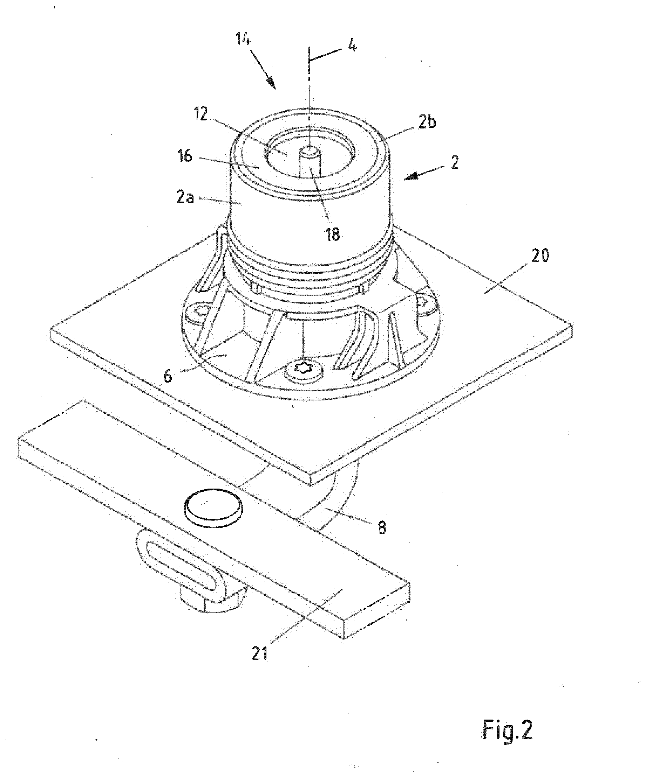

Zur Montage des Bordnetzsteckverbinders, beispielsweise im Bereich einer Kabeldurchführung, einer Unterbodendurchführung, einer Einführung in ein Gehäuse oder dergleichen kann, wie in Fig. 2 gezeigt, der Flansch 6 mit einem Anbauteil 20 verschraub sein. Das Anbauteil 20 kann ein Karosserieblech, ein Karosserieboden, eine Gehäusewand, eine Innenwand oder dergleichen eines Kraftfahrzeugs sein. Durch das Anbauteil 20 kann das Kabel 8 geführt sein und beispielsweise mit einem starren oder flexiblen Flachleiter 21 verbunden sein.

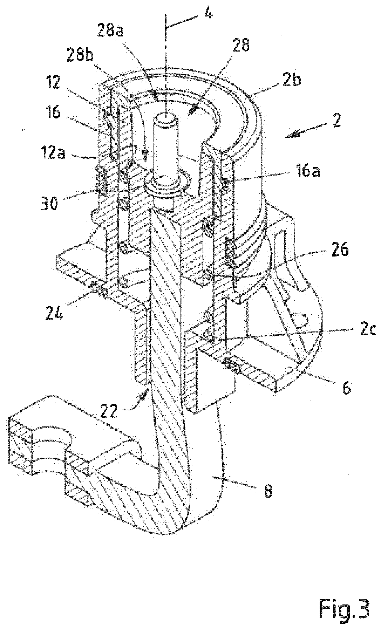

Der innere Aufbau des Gehäuseteils 2 ist in der Fig. 3 in einem Längsschnitt dargestellt. Zu erkennen ist, dass sich das Gehäuseteil 2 entlang der Längsachse 4 in Längsrichtung erstreckt. Im Bereich des Bodens 2c des Gehäuseteils 2 ist die Kabeldurchführung 22 vorgesehen, durch die das Kabel 8 in das Innere des Gehäuseteils 2, bevorzugt abgedichtet geführt ist. Das Kabel 8 ist in der Kabeldurchführung 22 entlang der Längsachse 4 verschiebbar angeordnet. An dem Flansch 6 kann bodenseitig eine Dichtung 24 vorgesehen sein, wobei diese Dichtung 24 mit dem Anbauteil 20 im verbundenen Zustand kontaktiert ist und hierüber eine Abdichtung am Flansch 6 bewirkt.

Das Gehäuseteil 2 ist in seinem Inneren hülsenförmig. Im Inneren des Gehäuseteils 2, welches beispielsweise als Hohlzylinder gebildet sein kann, kann eine Feder 26 am Boden 2c anliegen. Die Feder 26 erstreckt sich innerhalb des Gehäuseteils 2 in der Längsachse 4. Ausgehend vom Boden 2c ist im Anschluss an die Feder 26 das Anschlussteil 12 in dem Gehäuseteil 2 angeordnet. Das Anschlussteil 12 hat eine radial nach außen weisende Schulter 12a und somit zwei Bereiche mit unterschiedlichen Durchmessern. Der Bereich mit dem geringeren Durchmesser ist so geformt, dass in einem Ringraum zwischen dem Anschlussteil 12 und der inneren Mantelfläche des Gehäuseteils 2 die Feder 26 beweglich angeordnet ist. Durch die Schulter 12a an der der Bereich mit dem geringeren Durchmesser in dem Bereich mit dem größeren Durchmesser übergeht, ist die Feder 26 angeschlagen.

Das Anschlussteil 12 erstreckt sich des Weiteren in Richtung der Stirnseite 2b. Im Bereich der Stirnseite 2b ist die Stirnfläche des Anschlussteils 12 an dem Kragen 16 angeschlagen.

Zum Zusammenbau des Gehäuseteils 2 wird zunächst die Feder 26 stirnseitig in die Öffnung eingesetzt. Anschließend wird das Anschlussteil 12 mit seiner Schulter 12a auf die Feder 26 aufgesetzt und die Feder 26 wird bevorzugt vorgespannt. Durch ein Einschieben entlang der Längsachse 4 gelangt das Anschlussteil 12 gänzlich in den Innenraum des Gehäuseteils 2. Der Kragen 16 wird anschließend mit einer Rastnase 16a im Inneren des Gehäuseteils 2 verrastet. Durch den Kragen 16 ist das Anschlussteil 12 im Inneren des Gehäuseteils 2 fixiert. Das Anschlussteil 12 kann jedoch in Längsrichtung gegen die Federkraft der Feder 26 hin zum Boden 2c des Gehäuseteils 2 gedrückt werden.

Das Anschlussteil 12 hat an seiner dem Kabel 8 abgewandten Seite eine Aufnahme 28. Die Aufnahme 28 hat einen Boden 28a und eine stirnseitige Öffnung 28b. Die Aufnahme 28 erstreckt sich hin zum Boden 28a in einer konischen Form. Am Boden 28a, insbesondere im Bereich der Schulter 12a kann ein Distanzstück 30 in der Aufnahme 28 angeordnet sein. Die Aufnahme 28 als auch das Distanzstück 30 erstrecken sich parallel zueinander in der Längsachse 4.

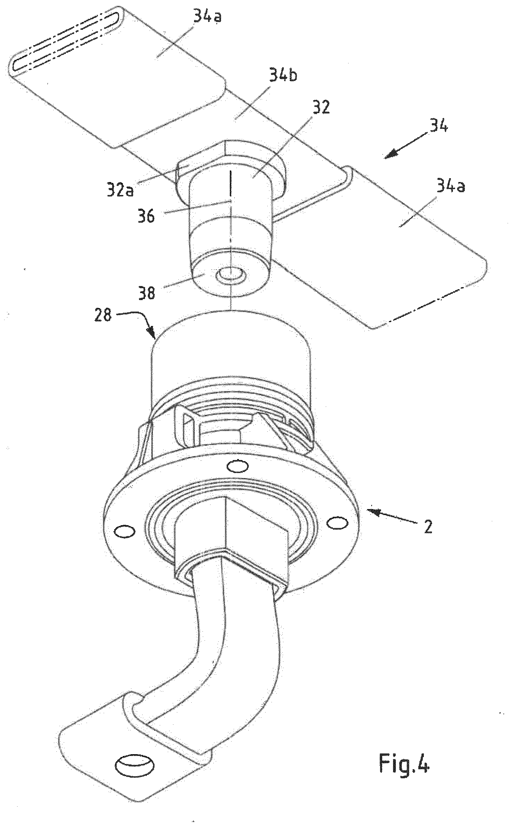

Korrespondierend zu der Aufnahme 28 hat der Bordnetzsteckverbinder ein Steckelement 32, wie es in der Fig. 4 gezeigt ist. Fig. 4 zeigt das Gehäuseteil 2 gemäß der Fig. 1. Der Aufnahme 28 gegenüberliegend kann das Steckelement 32 an einem Flachkabel 34 angeordnet sein. Das Flachkabel 34 kann stirnseitig (nicht gezeigt) oder in seinem Verlauf von der Isolation 34a befreit sein und der blanke Leiter 34b ist freigelegt. Auf diesem blanken Leiter 34b kann das Steckelement 32 befestigt, insbesondere stoffschlüssig z.B. reibverschweißt sein. Das Flachteil 34 erstreckt sich in einer Längsachse 36. Die Längsachse 36 ist insbesondere parallel zur Flächennormalen auf der Oberfläche, auf der das Steckelement 32 an dem Flachkabel 34 befestigt ist.

An dem Steckelement 32 kann an einer Stirnfläche, welche im Einbauzustand dem Gehäuseteil 2 zugewandt ist, einen Isolator 38 aufweisen. Der Isolator 38 kann als kappenförmiges Element auf der Stirnfläche des Steckelements 32 aufliegen und eine Durchgangsöffnung haben.

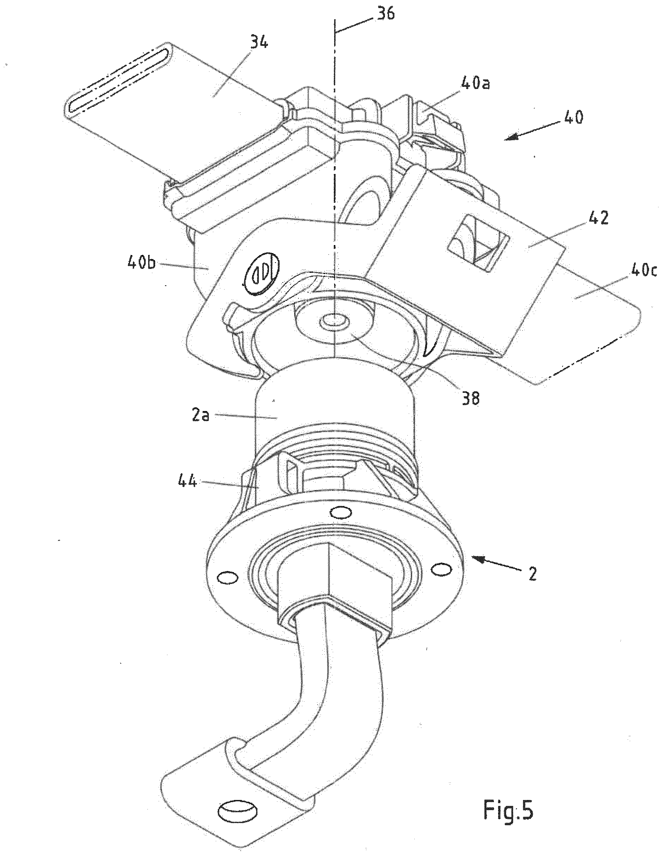

Das Steckelement 32 samt Isolator 38 wird von einem zweiten Gehäuseteil 40 aufgenommen, wie in Fig. 5 gezeigt. Das zweite Gehäuseteil 40 kann einen Deckel 40a und ein Steckbereich 40b aufweisen. Der Steckbereich 40b ist zur Aufnahme des ersten Gehäuseteils 2 gebildet und hat eine sich parallel zur Längsachse 36 erstreckende Öffnung. Innerhalb dieser Öffnung verläuft das Steckelement 32, vorzugsweise konzentrisch zu der Öffnung. Das Steckelement 40b hat im Bereich der Öffnung eine innere Mantelfläche 40c die kongruent zur äußeren Mantelfläche 2a des ersten Gehäuseteils 2 ist.

Das Steckelement 32 ist ausgehend von einem Flansch 32a gemäß Fig. 4 in Richtung des Isolators 36 verjüngend geformt. Insbesondere ist die äußere Mantelfläche des Steckelements 32 kongruent zur inneren Mantelfläche der Aufnahme 28.

Das Flachkabel 34 wird in den Bereich des blanken Leiters 34b durch den Deckel 40a des Gehäuseteils 40 dichtend aufgenommen. Hierzu kann der Deckel 40a scharnierförmig, insbesondere mit einem Filmscharnier an dem Steckbereich 40b angelenkt sein und mit diesen verrastend verbunden werden.

An dem Gehäuseteil 40 kann ein Befestigungshebel 42 vorgesehen sein. Der Befestigungshebel ist dabei an der äußeren Mantelfläche des Steckbereichs 40 angelenkt. Der Befestigungshebel 42 ist zu einer Achse senkrecht zur Längsachse 36 an dem Gehäuseteil 40 schwenkbar gelagert. Der Befestigungshebel 32 interagiert mit einer Aufnahme 44 an dem ersten Gehäuseteil 2, so dass die Gehäuseteile 2, 40 in Richtung der Längsachse 36/4 zueinander fixiert werden können.

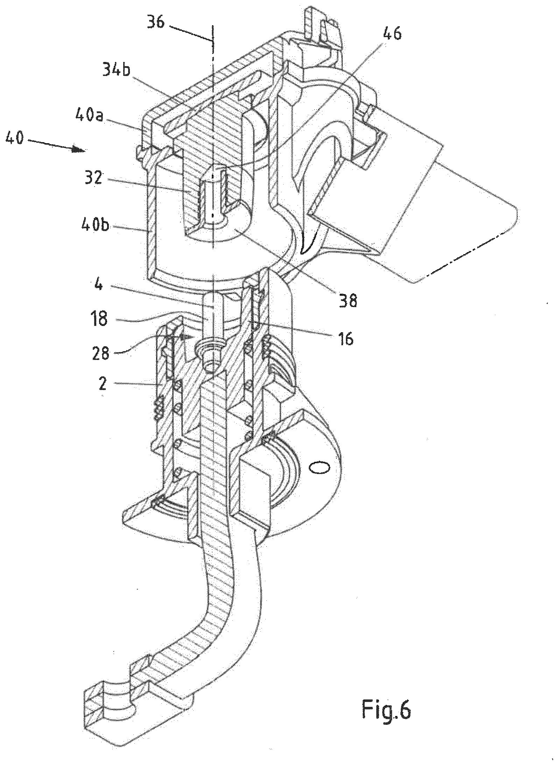

Fig. 6 zeigt die beiden Gehäuseteile 2, 40 in einem Längsschnitt. Zu erkennen ist, dass der Steckbereich 40a das Steckelement 32 gedichtet an dem blanken Leiter 34b aufnimmt. Innerhalb des Steckelements 32 kann eine Bohrung 46 vorgesehen sein. Der Isolator 38 deckt das Steckelement 32 stirnseitig ab und erstreckt sich in die Bohrung 46 hinein. Die Bohrung 46 korrespondiert zu dem Distanzstück 18. Das Distanzstück 18 erstreckt sich entlang der Längsachse 4 und die Bohrung 36 erstreckt sich entlang der Längsachse 36. Zum Fügen der beiden Gehäuseteile 2, 40 wird das Gehäuseteil 2 in die Öffnung des Gehäuseteils 40 eingeschoben. Hierbei kommt das Distanzstück 38 in Eingriff mit der Bohrung 46. Die innere Mantelfläche der Aufnahme 28 kommt in Kontakt mit der äußeren Mantelfläche des Steckelements 32. Das Anschlussteil 12 wird soweit auf das Steckelement 32 aufgeschoben, bis das Distanzstück 18 am Boden der Bohrung 46 anschlägt.

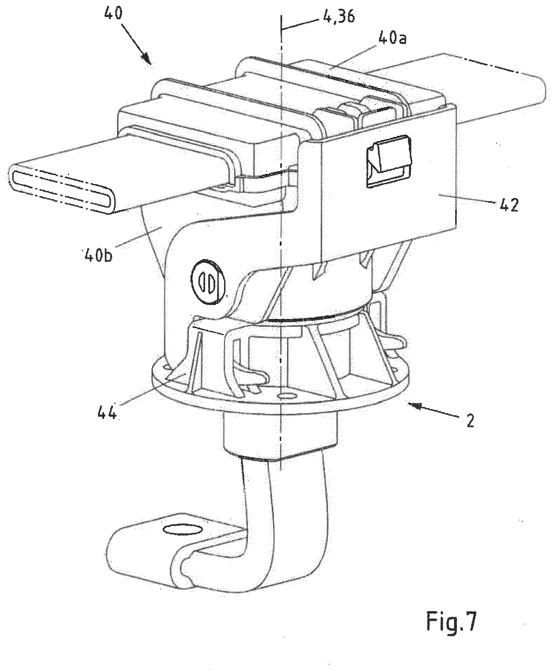

Im zusammengebauten Zustand ist der Befestigungshebel 42, wie in Fig. 7 dargestellt, umgelegt und kommt in Eingriff mit den Aufnahmen 44. Hierdurch sind die beiden Gehäuseteile 2, 40 relativ zu der Längsachse 4, 36, die im zusammengebauten Zustand kollinear verlaufen, fixiert.

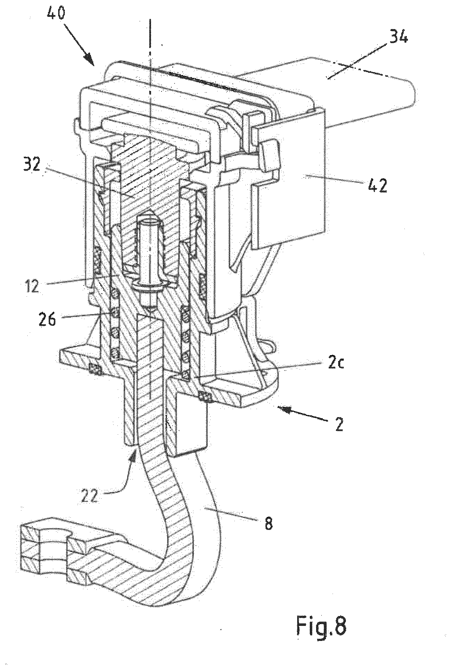

Wie in der Fig. 8 zu erkennen ist, ist im zusammengebauten Zustand das Anschlussteil 12 über das Steckelement 32 geschoben. Die äußere Mantelfläche des Steckelements 32 ist in unmittelbaren Kontakt mit der inneren Mantelfläche der Aufnahme 28 des Anschlussteils 12. Durch das Zusammenschieben ist die Feder 26 gegenüber dem unverbauten Zustand komprimiert. Die Feder 26 übt eine Kraft in Richtung des Steckelements 32 auf das Anschlussteil 12 aus. Hierdurch kommt es zu einem innigen, dynamisch stabilen und dauerhaften Kontakt zwischen dem Anschlussteil 12 und dem Steckelement 32, so dass ein guter elektrischer Übergang ermöglicht ist. Beim Zusammenschieben wird das Anschlussteil 12 in Richtung des Bodens 2c bewegt. Dabei wird das Kabel 8 durch die Kabeldurchführung 22 ebenfalls bewegt.

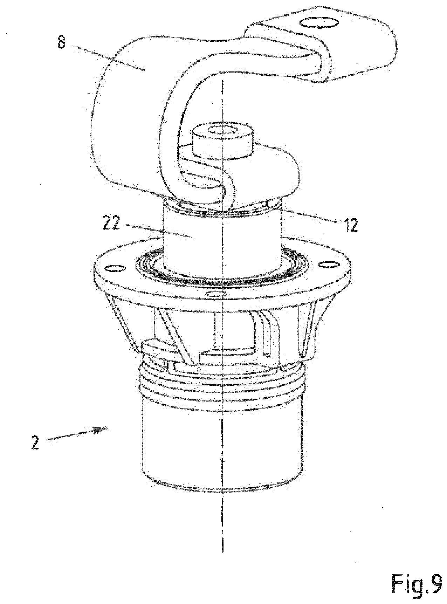

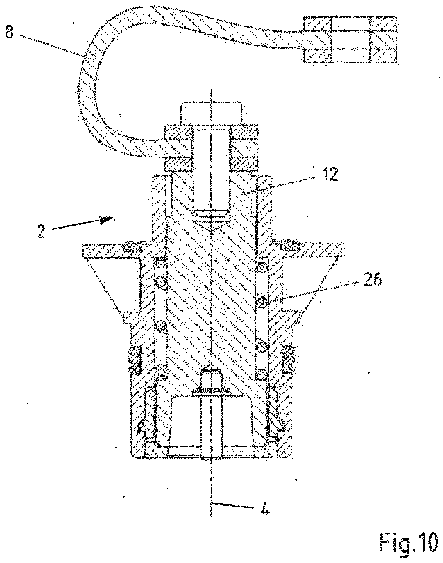

Fig. 9 zeigt eine weitere Alternative eines ersten Gehäuseteils 2. Hierbei ist das Kabel 8 außerhalb des Gehäuseteils 2 an dem Anschlussteil 12 befestigt und das Anschlussteil 12 ist beweglich in der Kabeldurchführung 22 angeordnet. Dies ist in der Fig. 10 nochmals dargestellt. Das Kabel 8 ist außerhalb des Gehäuseteils 2 mit dem Anschlussteil 12 elektrisch und mechanisch verbunden. Das Anschlussteil 12 kann parallel zur Längsachse 4 innerhalb des Gehäuseteils 2 bewegt werden, wobei durch diese Bewegung die Feder 26 gespannt werden kann.

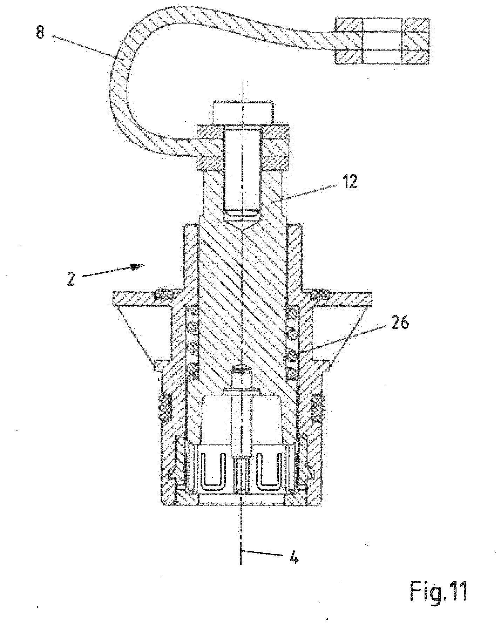

Fig. 11 zeigt das erste Gehäuseteil 2 gemäß der Fig. 9 im Einbauzustand, d.h. wenn die Feder 26 komprimiert ist. Zu erkennen ist, dass gegenüber der Fig. 10 das Anschlussteil 12 aus dem Gehäuseteil 2 in Teilen herausgeschoben ist. Die Feder 26 ist gespannt.

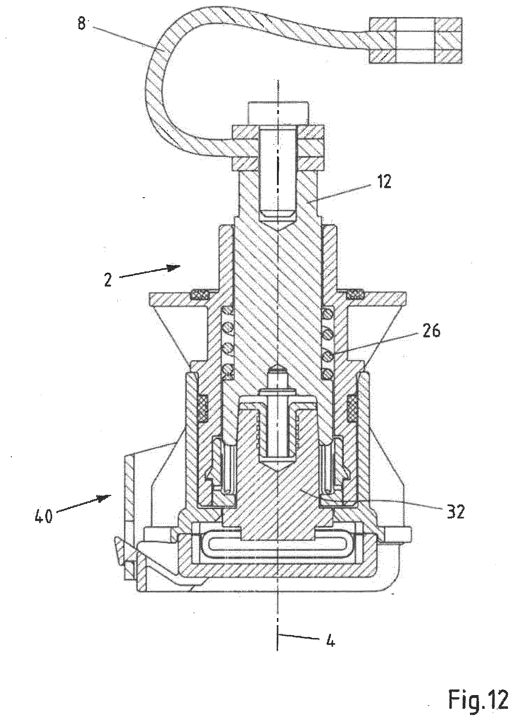

Fig. 12 zeigt den Steckverbinder gemäß der Fig. 9-11 in einem Längsschnitt im zusammengebauten Zustand. Hier ist zu erkennen, dass in diesem Zustand das Steckelement 32 innerhalb der Aufnahme des Anschlussteils 12 aufgenommen ist. Die Feder 26 drückt das Anschlussteil 12 in Richtung des Steckelements 32. Die Gehäuseteile 2, 40 sind durch den Befestigungshebel 42 relativ zueinander fixiert.

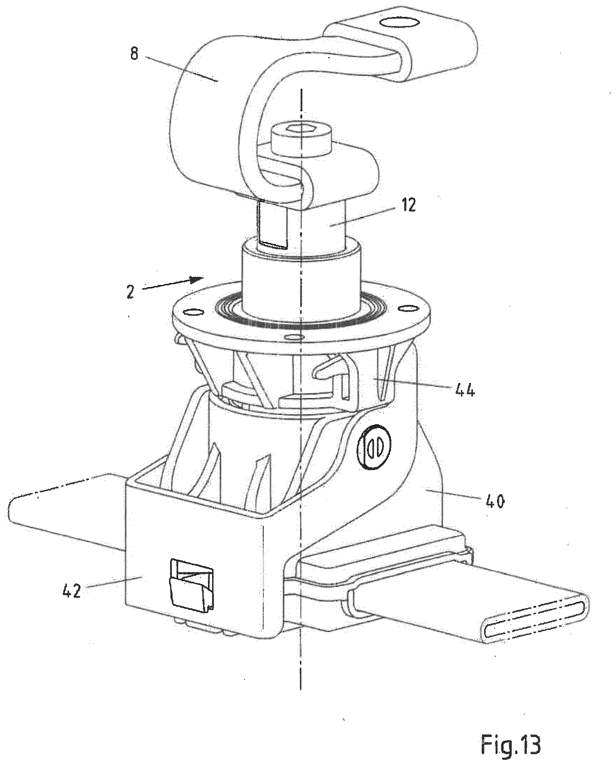

Fig. 13 zeigt den Steckverbinder gemäß der Fig. 12 in einer Ansicht. Zu erkennen ist die Fixierung des Befestigungshebels 42 an den Aufnahmen 44, so dass die beiden Gehäuseteile 2, 40 relativ zueinander fixiert sind. Das Anschlussteil 12 ist zumindest in Teilen aus dem Gehäuseteil 2 herausgedrückt.

### Bezugszeichenliste

- 2: Gehäuseteil
- 2a: äußere Mantelfläche
- 2b: Stirnseite
- 2c: Boden
- 4: Längsachse
- 6: Flansch
- 8: Kabel
- 12: Anschlussteil
- 12a: Schulter
- 14: Öffnung
- 16: Kragen
- 18: Distanzstück
- 20: Anbauteil
- 21: Flachleiter
- 22: Kabeldurchführung
- 24: Dichtung
- 26: Feder
- 28: Aufnahme
- 30: Distanzstück
- 32: Steckelement
- 34: Flachkabel
- 34a: Isolation
- 34b: blanker Leiter
- 36: Längsachse
- 38: Isolator
- 40: Gehäuseteil
- 40a: Deckel
- 40b: Steckbereich
- 40c: innere Mantelfläche
- 42: Befestigungshebel
- 44: Aufnahmen
- 46: Bohrung

## Patentansprüche

1. Bordnetzsteckverbinder, insbesondere für Hochspannungsbordnetze umfassend,
- ein in einem ersten Gehäuseteil (2) angeordnetes erstes Anschlussteil (12), wobei
- das erste Gehäuseteil (2) eine Längserstreckung entlang einer Längsachse (4) hat und eine stirnseitige Öffnung (14) aufweist und das erste Anschlussteil (12) in dem ersten Gehäuseteil (2) entlang der Längsachse (4) beweglich gelagert ist,
- ein in einem zweiten Gehäuseteil (40) angeordnetes zweites Anschlussteil, wobei
- das zweite Gehäuseteil (40) eine Längserstreckung entlang einer Längsachse (36) hat und eine stirnseitige Öffnung aufweist,
- wobei im verbundenen Zustand des Steckverbinders
- die Längsachsen (4, 36) des ersten (2) und zweiten Gehäuseteil (40) kollinear verlaufen und
- das zweite Gehäuseteil (40) relativ zum ersten Gehäuseteil (2) zumindest in Längsrichtung fixiert ist und das zweite Anschlussteil in mechanischen Kontakt mit dem ersten Anschlussteil (12) ist, wobei
- das erste Anschlussteil (12) entlang der Längsachse (4) durch ein Federelement (26) federnd in dem ersten Gehäuseteil (2) gelagert ist,
**dadurch gekennzeichnet,**
- **dass** das Federelement (26) im verbunden Zustand gestaucht ist, wodurch eine permanente Federkraft auf die Verbindung zwischen den beiden Anschlussteilen (12) wirkt, und
- **dass** das zweite Anschlussteil auf einer abisolierten breiten Oberfläche eines Flachleiters (34) in Form eines Bolzens angeordnet ist, dass das zweite Gehäuseteil (40) eine Leiteraufnahme zur Aufnahme (28) des Flachleiters (34) aufweist und dass die Leiteraufnahme im Bereich ihrer Einführungen für den Flachleiter (34) umlaufende Dichtungen aufweist.

2. Bordnetzsteckverbinder nach Anspruch 1,
**dadurch gekennzeichnet,**
- **dass** eines der Anschlussteile (12) eine hülsenförmige Aufnahme (28) und eines der Anschlussteile (12) ein zu der Aufnahme (28) kongruentes, stabförmiges Steckelement (32) aufweist und/oder
- **dass** im verbundenen Zustand das Steckelement (32) in der Aufnahme (28) eingesteckt und das Federelement komprimiert ist und/oder
- **dass** im verbundenen Zustand eines der Gehäuseteile (2, 40) zumindest teilweise in die stirnseitige Öffnung (14) des anderen der Gehäuseteile (2, 40) eingesteckt ist, insbesondere
- **dass** im verbundenen Zustand das erste Gehäuseteil (2) in die stirnseitige Öffnung (14) des zweiten Gehäuseteils (40) eingesteckt ist oder
- **dass** im verbundenen Zustand das zweite Gehäuseteil (40) in die stirnseitige Öffnung (14) des ersten Gehäuseteils (2) eingesteckt ist.

3. Bordnetzsteckverbinder nach Anspruch 2,
**dadurch gekennzeichnet,**
- **dass** sich die Aufnahme (28) von einer stirnseitigen Öffnung (14) hin zu einem Boden verjüngt, insbesondere konisch verjüngt und/oder dass sich das Steckelement (32) hin zu seiner Stirnfläche (2b) verjüngt, insbesondere konisch verjüngt.

4. Bordnetzsteckverbinder nach einem der vorangehenden Ansprüche 2 bis 3,
**dadurch gekennzeichnet,**
- **dass** im verbundenen Zustand eine innere Mantelfläche der Aufnahme (28) und eine äußere Mantelfläche des Steckelements (32) unmittelbar miteinander in Kontakt sind.

5. Bordnetzsteckverbinder nach einem der vorangehenden Ansprüche 2 bis 4,
**dadurch gekennzeichnet,**
- **dass** sich in der Aufnahme (28) ein Distanzstück (30) vom Boden der Aufnahme (28) hin zu einer stirnseitigen Öffnung (14) der Aufnahme (28) erstreckt, insbesondere dass sich das Distanzstück (30) stabförmig im Inneren der Aufnahme (28) erstreckt.

6. Bordnetzsteckverbinder nach Anspruch 5,
**dadurch gekennzeichnet,**
- **dass** das Steckelement (32) einen sich von der Stirnseite (2b) des Steckelements (32) in Längsachse (4) erstreckenden Rücksprung für das Distanzstück (30) der Aufnahme (28) aufweist und dass im verbundenen Zustand das Distanzstück (30) in dem Rücksprung eingesteckt ist, insbesondere, dass das Distanzstück (30) bis zu einem Anschlag in dem Rücksprung eingesteckt ist.

7. Bordnetzsteckverbinder nach einem der vorangehenden Ansprüche,
**dadurch gekennzeichnet,**
- **dass** das erste Anschlussteil (12) mit einem flexiblen Kabel (8) verbunden ist, wobei
- das flexible Kabel (8) durch eine Durchführung in das Innere des ersten Gehäuseteils (2) eingeführt ist und entlang der Längsachse (4) beweglich in der Durchführung gelagert ist oder
- das erste Anschlussteil (12) durch eine Durchführung aus dem Inneren des ersten Gehäuseteils (2) herausgeführt ist und entlang der Längsachse (4) beweglich in der Durchführung gelagert ist.

8. Bordnetzsteckverbinder nach einem der vorangehenden Ansprüche,
**dadurch gekennzeichnet,**
- **dass** das erste Anschlussteil (12) an einem radial nach innen weisenden Kragen (16) an der stirnseitigen Öffnung (14) des ersten Gehäuseteils (2) gelagert ist, insbesondere dass der nach innen weisende Kragen (16) in einem Ringraum zwischen der äußeren Mantelfläche des ersten Anschlussteils und der inneren Mantelfläche des ersten Gehäuseteils angeordnet und insbesondere an dem ersten Gehäuseteil relativ zur Längsachse fixiert gelagert ist.

9. Bordnetzsteckverbinder nach einem der vorangehenden Ansprüche,
**dadurch gekennzeichnet,**
- **dass** das Federelement zwischen einem Boden (2c) des ersten Gehäuseteils (2) und einer zumindest teilweise umlaufenden, radial nach außen weisenden Schulter (12a) des ersten Anschlussteils (12) gelagert ist und im verbundenen Zustand hin zum Boden (2c) des Gehäuseteils (2) komprimiert ist und so eine Federkraft parallel zur Längsachse (3, 36) in Richtung der Schulter (12a) auf das erste Anschlussteil (12) ausübt.

10. Bordnetzsteckverbinder nach einem der vorangehenden Ansprüche,
**dadurch gekennzeichnet,**
- **dass** an einer äußeren Mantelfläche (2a) eines der Gehäuseteile (2, 40) eine umlaufende Dichtung (24) angeordnet ist, die im verbundenen Zustand mit einer inneren Mantelfläche (40c) des anderen Gehäuseteils (2, 40) in Kontakt ist.

11. Bordnetzsteckverbinder nach einem der vorangehenden Ansprüche,
**dadurch gekennzeichnet,**
- **dass** das zweite Anschlussteil (12) stoffschlüssig an dem Flachleiter (21), insbesondere aus Vollmaterial befestigt ist.

12. Bordnetzsteckverbinder nach einem der vorangehenden Ansprüche,
**dadurch gekennzeichnet,**
- **dass** die Leiteraufnahme durchgehend ist und den Flachleiter (21) entlang seiner Ausbreitungsrichtung aufnimmt.

13. Bordnetzsteckverbinder nach einem der vorangehenden Ansprüche,
**dadurch gekennzeichnet,**
- **dass** die Leiteraufnahme senkrecht zur Längsachse (4, 36) des zweiten Gehäuseteils (40) verläuft.

14. Bordnetzsteckverbinder nach einem der vorangehenden Ansprüche,
**dadurch gekennzeichnet,**
- **dass** an dem zweiten Anschlussteil (12) ein stirnseitig angeordneter, die Stirnseite (2b) überdeckender Isolator (38) angeordnet ist.

15. Bordnetzsteckverbinder nach Anspruch 14,
**dadurch gekennzeichnet,**
- **dass** der Isolator (38) eine zur Aufnahme (28) des Distanzstücks (30) gebildete Öffnung (14) aufweist, insbesondere dass die Öffnung (14) koaxial zum Rücksprung des Steckelements (32) ist.

16. Bordnetzsteckverbinder nach einem der vorangehenden Ansprüche,
**dadurch gekennzeichnet,**
- **dass** an einem der Gehäuseteile (2, 40) ein um eine Achse senkrecht zur Längsachse (4, 36) verschwenkbarer Befestigungshebel (42) angeordnet ist, der im verbundenen Zustand mit einem Befestigungsmittel an dem anderen Gehäuseteil (2, 40) in Eingriff ist.

## Claims

1. On-board power supply connector, in particular for high-voltage on-board power supplies, comprising,
- a first connection part (12) arranged in a first housing part (2), wherein
- the first housing part (2) has a longitudinal extension along a longitudinal axis (4) and has an opening (14) on the end face, and the first connection part (12) is mounted in the first housing part (2) such that it can be moved along the longitudinal axis (4),
- a second connection part arranged in a second housing part (40), wherein
- the second housing part (40) has a longitudinal extension along a longitudinal axis (36) and has an opening on the end face,
- wherein in the connected state of the connector
- the longitudinal axes (4, 36) of the first (2) and second housing parts (40) are collinear, and
- the second housing part (40) is fixed relative to the first housing part (2) at least in the longitudinal direction and the second connection part is in mechanical contact with the first connection part (12), wherein
- the first connection part (12) is spring-mounted in the first housing part along the longitudinal axis (4) by a spring element (26),
**characterized in,**
- **that** the spring element (26) is compressed in the connected state, such that a permanent spring force acts on the connection between the connection parts (12), and
- **that** the second connection part is arranged on a stripped broad surface of a flat conductor (34) in the form of a bolt, that the second connection part (40) has a conductor receptacle (28) for receiving the flat conductor (34) and that the conductor receptacle has, in its bushing area for the flat conductor (34), a circumferential seal.

2. On-board power supply connector according to claim 1,
**characterized in**
- **that** one of the connection parts (12) has a sleeve-shaped receptacle (28) and one of the connection parts (12) has a rod-shaped plug-in element (32) congruent with the receptacle (28) and/or
- **that**, in the connected state, the plug-in element (32) is inserted in the receptacle (28) and the spring element is compressed and/or
- **that**, in the connected state, one of the housing parts (2, 40) is at least partially inserted into the end-face opening (14) of the other of the housing parts (2, 40), in particular
- **that**, in the connected state, the first housing part (2) is inserted into the end-face opening (14) of the second housing part (40), or
- **that**, in the connected state, the second housing part (40) is inserted into the end-face opening (14) of the first housing part (2).

3. On-board power supply connector according to claim 2,
**characterized in**
- **that** the receptacle (28) tapers from an end-face opening (14) toward a base, in particular tapers conically, and/or in that the plug-in element (32) tapers toward its end face (2b), in particular tapers conically.

4. On-board power supply connector according to one of the preceding claims 2 to 3,
**characterized in**
- **that**, in the connected state, an inner lateral surface of the receptacle (28) and an outer lateral surface of the plug-in element (32) are in direct contact with one another.

5. On-board power supply connector according to one of the preceding claims 2 to 4,
**characterized in**
- **that** a spacer (30) extends in the receptacle (28) from the base of the receptacle (28) to an end-face opening (14) of the receptacle (28), in particular in that the spacer (30) extends in the form of a rod in the interior of the receptacle (28).

6. On-board power supply connector according to claim 5,
**characterized in**
- **that** the plug-in element (32) has a recess, extending from the end face (2b) of the plug-in element (32) in the longitudinal axis (4), for the spacer (30) of the receptacle (28), and in that, in the connected state, the spacer (30) is inserted in the recess, in particular in that the spacer (30) is inserted up to a stop in the recess.

7. On-board power supply connector according to one of the preceding claims, **characterized in**
- **that** the first connection part (12) is connected to a flexible cable (8), wherein
- the flexible cable (8) is inserted through a bushing into the interior of the first housing part and is movably mounted in the bushing along the longitudinal axis (4), or
- the first connection part (12) is led out of the interior of the first housing part (2) through a bushing and is mounted movably in the bushing along the longitudinal axis (4).

8. On-board power supply connector according to any one of the preceding claims, **characterized in**
- **that** the first connection part (12) is mounted on a radially inwardly facing collar (16) on the end opening (14) of the first housing part (2), in particular in that the inwardly facing collar (16) is arranged in an annular space between the outer lateral surface of the first connection part and the inner lateral surface of the first housing part and, in particular, is mounted on the first housing part in a fixed manner relative to the longitudinal axis.

9. On-board power supply connector according to one of the preceding claims, **characterized in**
- **that** the spring element is mounted between a base (2c) of the first housing part (2) and an at least partially circumferential, radially outwardly pointing shoulder (12a) of the first connection part (12) and, in the connected state, is compressed towards the base (2c) of the housing part (2) and thus exerts a spring force parallel to the longitudinal axis (3, 36) in the direction of the shoulder (12a) on the first connection part (12).

10. On-board power supply connector according to any one of the preceding claims, **characterized in**
- **that** a circumferential seal (24) is arranged on an outer lateral surface (2a) of one of the housing parts (2, 40), which seal is in contact with an inner lateral surface (40c) of the other housing part (2, 40) in the connected state.

11. On-board power supply connector according to one of the preceding claims, **characterized in**
- **that** the second connection part (12) is fastened to the flat conductor (21), in particular to a solid material conductor.

12. On-board power system connector according to one of the preceding claims, **characterized in**
- **that** the conductor receptacle is continuous and receives the conductor (21) along its propagation direction.

13. On-board power supply connector according to one of the preceding claims, **characterized in**
- **that** the conductor receptacle extends perpendicularly to the longitudinal axis (4, 36) of the second housing part (40).

14. On-board power supply connector according to one of the preceding claims, **characterized in**
- **that** an insulator (38), which is arranged on the end face (2b) and covers the end face, is arranged on the second connection part (12).

15. On-board power supply connector according to claim 14,
**characterized in**
- **that** the insulator (38) has an opening (28) formed to accommodate the spacer (30), in particular in that the opening (14) is coaxial with the recess of the plug-in element (32).

16. On-board power supply connector according to one of the preceding claims, **characterized in**
- **that** a fastening lever (42) is arranged on one of the housing parts (2, 40), which can be pivoted about an axis perpendicular to the longitudinal axis (4, 36) and, in the connected state, engages with a fastening means on the other housing part (2, 40).

## Revendications

1. Connecteur de réseau de bord, en particulier pour des réseaux de bord à haute tension, comprenant,
- une première pièce de raccordement (12) disposée dans une première partie de boîtier (2), où
- la première partie de boîtier (2) a une extension longitudinale le long d'un axe longitudinal (4) et a une ouverture frontale (14) et la première pièce de raccordement (12) est logée dans la première partie de boîtier (2) de manière mobile le long de l'axe longitudinal (4),
- une deuxième pièce de raccordement disposée dans une deuxième partie de boîtier (40),
où
- la deuxième partie de boîtier (40) s'étend longitudinalement le long d'un axe longitudinal (36) et a une ouverture frontale,
- où, à l'état connecté du connecteur
- les axes longitudinaux (4, 36) de la première (2) et de la deuxième (40) partie du boîtier s'étendent colinéaires et
- la deuxième partie de boîtier (40) est fixée par rapport à la première partie de boîtier (2) au moins dans la direction longitudinale et la deuxième pièce de raccordement est en contact mécanique avec la première pièce de raccordement (12), où
- la première pièce de raccordement (12) est logée de manière élastique dans la première partie de boîtier (2) le long de l'axe longitudinal (4) par un élément à ressort (26),
**caractérisé en ce**
- **que** l'élément élastique (26) est comprimé à l'état connecté, ce qui fait qu'une force élastique permanente agit sur la liaison entre les deux pièces de raccordement (12), et
- **que** la deuxième pièce de raccordement est disposée sur une surface large dénudée d'un conducteur plat (34) sous la forme d'un boulon, que la deuxième partie de boîtier (40) a un logement de conducteur pour recevoir (28) le conducteur plat (34) et que le logement de conducteur a des joints périphériques dans la zone de ses ouvertures pour le conducteur plat (34).

2. Connecteur de réseau de bord selon la revendication 1,
**caractérisé en ce**
- **que** l'une des pièces de raccordement (12) a un logement (28) en forme de manchon et l'une des pièces de raccordement (12) a un élément enfichable (32) en forme de tige congruent au logement (28), et/ou
- **que**, à l'état connecté, l'élément enfichable (32) est enfiché dans le logement (28) et l'élément élastique est comprimé et/ou
- **qu'**à l'état connecté, l'une des parties de boîtier (2, 40) est au moins en partie insérée dans l'ouverture frontale (14) de l'autre des parties de boîtier (2, 40), en particulier
- **qu'**à l'état connecté, la première partie de boîtier (2) est insérée dans l'ouverture frontale(14) de la deuxième partie de boîtier (40) ou
- **qu'**à l'état connecté, la deuxième partie de boîtier (40) est enfichée dans l'ouverture frontale (14) de la première partie de boîtier (2).

3. Connecteur de réseau de bord selon la revendication 2,
**caractérisé en ce**
- **que** le logement (28) se rétrécit depuis une ouverture frontale (14) vers un fond, en particulier se rétrécit de manière conique et/ou que l'élément enfichable (32) se rétrécit vers sa face frontale (2b), en particulier se rétrécit de manière conique.

4. Connecteur de réseau de bord selon l'une des revendications 2 à 3 précédentes, **caractérisé en ce**
- **qu'**à l'état connecté, une surface d'enveloppe intérieure du logement (28) et une surface d'enveloppe extérieure de l'élément enfichable (32) sont directement en contact l'une avec l'autre.

5. Connecteur de réseau de bord selon l'une des revendications 2 à 4,
**caractérisé en ce**
- **qu'**une pièce d'écartement (30) s'étend dans le logement (28) depuis le fond du logement (28) jusqu'à une ouverture frontale (14) du logement (28), en particulier que la pièce d'écartement (30) s'étend en forme de barre à l'intérieur du logement (28).

6. Connecteur de réseau de bord selon la revendication 5,
**caractérisé en ce**
- **que** l'élément enfichable (32) a un retrait s'étendant depuis la face frontale (2b) de l'élément enfichable (32) dans l'axe longitudinal (4) pour la pièce d'écartement (30) du logement (28) et qu'à l'état connecté, la pièce d'écartement (30) est enfichée dans le retrait, en particulier que la pièce d'écartement (30) est enfichée jusqu'à une butée dans le retrait.

7. Connecteur de réseau de bord selon l'une des revendications précédentes, **caractérisé en ce**
- **que** la première pièce de raccordement (12) est reliée à un câble flexible (8), où
- le câble flexible (8) est introduit par un passage à l'intérieur de la première partie de boîtier (2) et est logé dans le passage de manière mobile le long de l'axe longitudinal (4) ou
- la première pièce de raccordement (12) est introduite par un passage hors de l'intérieur de la première partie de boîtier (2) et est logée de manière mobile dans le passage le long de l'axe longitudinal (4).

8. Connecteur de réseau de bord selon l'une des revendications précédentes, **caractérisé en ce**
- **que** la première pièce de raccordement (12) est montée sur un collet (16) dirigé radialement vers l'intérieur sur l'ouverture frontale (14) de la première partie de boîtier (2), en particulier que le collet (16) dirigé vers l'intérieur est disposé dans un espace annulaire entre la surface d'enveloppe extérieure de la première pièce de raccordement et la surface d'enveloppe intérieure de la première partie de boîtier et en particulier est monté de manière fixe sur la première partie de boîtier par rapport à l'axe longitudinal.

9. Connecteur de réseau de bord selon l'une des revendications précédentes,
**caractérisé en ce**
- **que** l'élément de ressort est monté entre un fond (2c) de la première partie de boîtier (2) et un épaulement (12a) au moins partiellement périphérique, orienté radialement vers l'extérieur de la première partie de raccordement (12) et, à l'état connecté, est comprimé vers le fond (2c) de la partie de boîtier (2) et exerce ainsi une force élastique parallèlement à l'axe longitudinal (3, 36) en direction de l'épaulement (12a) sur la première partie de raccordement (12).

10. Connecteur de réseau de bord selon l'une des revendications précédentes,
**caractérisé en ce**
- **qu'**un joint périphérique (24) est disposé sur une surface d'enveloppe extérieure (2a) de l'une des parties de boîtier (2, 40), qui est en contact avec une surface d'enveloppe intérieure (40c) de l'autre partie de boîtier (2, 40) à l'état connecté.

11. Connecteur de réseau de bord selon l'une des revendications précédentes,
**caractérisé en ce**
- **que** la deuxième pièce de raccordement (12) est fixée par liaison de matière au conducteur plat (21), en particulier en matériau plein.

12. Connecteur de réseau de bord selon l'une des revendications précédentes, **caractérisé en ce**
- **que** le logement du conducteur est continu et reçoit le conducteur plat (21) le long de sa direction de propagation.

13. Connecteur de réseau de bord selon l'une des revendications précédentes,
**caractérisé en ce**
- **que** le logement de conducteur s'étend perpendiculairement à l'axe longitudinal (4, 36) de la deuxième partie de boîtier (40).

14. Connecteur de réseau de bord selon l'une des revendications précédentes,
**caractérisé en ce**
- **qu'**un isolateur (38) disposé frontalement, recouvrant la face frontale (2b) est disposé sur la deuxième partie de raccordement (12).

15. Connecteur de réseau de bord selon la revendication 14,
**caractérisé en ce**
- **que** l'isolateur (38) a une ouverture (14) formée pour recevoir (28) la pièce d'écartement (30), en particulier que l'ouverture (14) est coaxiale au retrait de l'élément enfichable (32).

16. Connecteur de réseau de bord selon l'une des revendications précédentes,
**caractérisé en ce**
- **que** sur l'une des parties de boîtier (2, 40) est disposé un levier de fixation (42) pivotable autour d'un axe perpendiculaire à l'axe longitudinal (4, 36), qui, à l'état connecté, engrène avec un moyen de fixation sur l'autre partie de boîtier (2, 40).
